# EUROPEAN PATENT APPLICATION

(11) **EP 3 293 052 A1**
(43) Date of publication of application: **14.03.2018**
(21) Application number: 17188610.4
(22) Date of filing: 30.08.2017
(51) Int. Cl.: B60R 1/00, B60W 30/10, B60W 30/12, B60W 50/14

(54) **TRAILER LANE DEPARTURE WARNING AND SWAY ALERT**

(30) Priority: 08.09.2016 US 201615259126
(71) Applicant: Delphi Technologies, Inc., Troy, MI 48007-5052 (US)
(72) Inventor: KRISHNA PRASAD, Premchand, WESTFIELD, INDIANA 46074 (US); CASHLER, Robert, J, Kokomo, INDIANA 46902 (US); LASLEY, Andrew, J, NOBLESVILLE, INDIANA 46060 (US)
(74) Representative: Robert, Vincent

(57) **Abstract**

A trailer-detection system (10) includes a radar-sensor (20), an angle-detector (30), a camera (34), and a controller (48). The radar-sensor (20) is used to determine a range (22) and an azimuth-angle (24) of a radar-signal (26) reflected by a trailer (14) towed by a host-vehicle (12). The angle-detector (30) is used to determine a trailer-angle (32) relative to the host-vehicle (12) of the trailer (14) towed by the host-vehicle (12). The camera (34) is used to detect a lane-marking (36) of a roadway (18) traveled by the host-vehicle (12) and trailer (14). The controller (48) is in communication with the radar-sensor (20), the angle-detector (30), and the camera (34). The controller (48) is configured to determine when the trailer (14) is departing from a travel-lane (16) of the roadway (18) based on the radar-signal (26), the trailer-angle (32), and the lane-marking (36).

## Description

### TECHNICAL FIELD OF INVENTION

This disclosure generally relates to a trailer-detection system, and more particularly relates to a trailer-detection system that detects when a trailer towed by a host-vehicle is departing a lane.

### BACKGROUND OF INVENTION

Typical trailer lane-departure-warning (LDW) systems include sensors mounted to the host-vehicle and/or the trailer and use the change in the trailer-angle to determine whether the trailer has departed from the travel-lane. Undesirably, these trailer LDW systems typically rely on an operator of the host-vehicle to manually input the trailer dimension information through a user interface.

### SUMMARY OF THE INVENTION

In accordance with one embodiment, a trailer-detection system configured to determine a position of a trailer towed by a host-vehicle is provided. The trailer-detection system includes a radar-sensor, an angle-detector, a camera, and a controller. The radar-sensor is used to determine a range and an azimuth-angle of a radar-signal reflected by a trailer towed by a host-vehicle. The angle-detector is used to determine a trailer-angle relative to the host-vehicle of the trailer towed by the host-vehicle. The camera is used to detect a lane-marking of a roadway traveled by the host-vehicle and trailer. The controller is in communication with the radar-sensor, the angle-detector, and the camera, and is used to determine when the trailer is departing from a travel-lane of the roadway based on the radar-signal, the trailer-angle, and the lane-marking.

The system may include an alert-device detectable by an operator of the host-vehicle, and the controller may be further configured to activate the alert-device when the trailer is departing from the travel-lane of the roadway. The controller may be further configured to determine a trailer-sway-rate that is indicative of an oscillation of the trailer-angle. The system may include an alert-device detectable by an operator of the host-vehicle, and the controller may be further configured to activate the alert-device when the trailer-sway-rate is greater than a predetermined sway-threshold. The angle-detector may include a yaw-sensor used to determine a yaw-rate of the host-vehicle, and the trailer-angle may be determined based on the yaw-rate. The controller may determine a trailer-boundary based on the radar-signal. The controller may determine a trailer-length of the trailer based on the radar-signal. The controller may determine a trailer-width of the trailer based on the radar-signal. The camera may detect the lane-marking of the roadway ahead of the host-vehicle. The camera may detect the lane-marking of the roadway behind the host-vehicle. The camera may detect the lane-marking of the roadway ahead of the host-vehicle and detects the lane-marking of the roadway behind the host-vehicle.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a top view of a host-vehicle equipped with a trailer-detection system and towing a trailer in accordance with one embodiment;
Fig. 2 is a side view of the host-vehicle of Fig. 1 equipped with a trailer-detection system and towing a trailer in accordance with one embodiment;
Fig. 3 is an illustration of an image in a field-of-view of a camera that is part of the system of Fig. 1 in accordance with one embodiment; and
Fig. 4 is a top view of the same host-vehicle equipped with a trailer-detection system and towing a trailer of Fig. 1 illustrating a lane departure in accordance with one embodiment.

### DETAILED DESCRIPTION

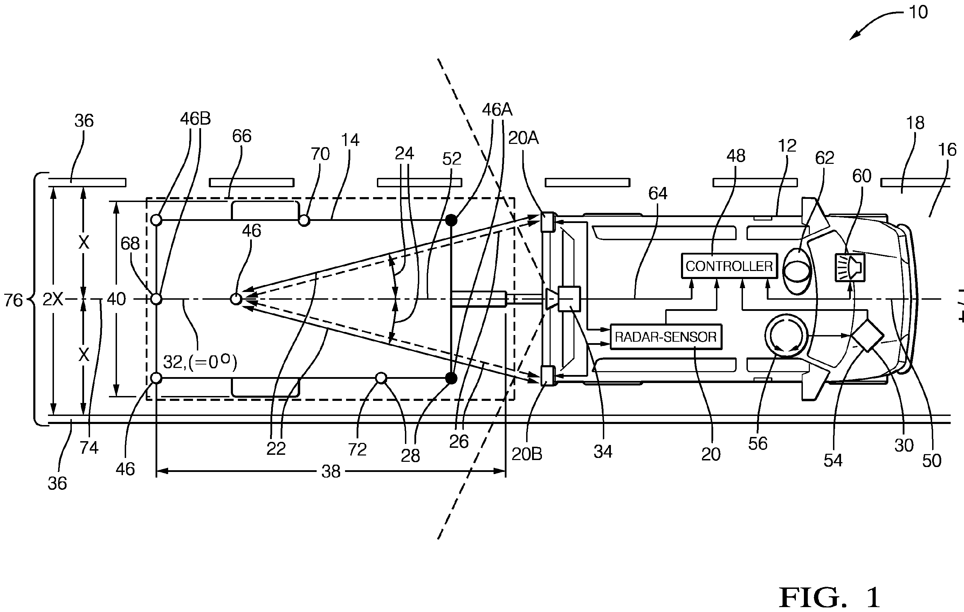

Fig. 1 illustrates a non-limiting example of a trailer-detection system 10, hereafter referred to as the system 10. The system 10 is generally configured to detect when a host-vehicle 12 equipped with the system 10 is towing a trailer 14. As will be described in more detail below, the system 10 is an improvement over prior trailer-detection systems because the system 10 is configured to more accurately determine when the trailer 14 towed by the host-vehicle 12 is departing from a travel-lane 16 of a roadway 18 by using a radar-sensor 20 to determine a range 22 and an azimuth-angle 24 of a radar-signal 26 reflected by a feature 28 of the trailer 14, using an angle-detector 30 to determine a trailer-angle 32 relative to the host-vehicle 12, and by using a camera 34 to detect a lane-marking 36 of the roadway 18 traveled by the host-vehicle 12. This improvement enables the system 10 to more accurately determine a trailer-length 38, a trailer-width 40, and a trailer-sway-rate 42 of the trailer 14.

The system 10 includes the radar-sensor 20 used to detect the radar-signal 26 that is reflected by features 28 of the trailer 14 towed by the host-vehicle 12. Typically, radar-systems on vehicles are capable of only determining a distance or range 22 and azimuth-angle 24 to a target so may be referred to as a two-dimensional (2D) radar-system. Other radar-systems are capable of determining an elevation-angle to a target so may be referred to as a three-dimensional (3D) radar-system. In the non-limiting example illustrated in Fig. 1, the radar-sensor 20 includes a left-sensor 20A and a right-sensor 20B. It is contemplated that the teachings presented herein are applicable to both 2D radar-systems and 3D radar-systems with one or more sensor devices, i.e. multiple instances of sensor devices are used to form the radar-sensor 20. The radar-sensor 20 is generally configured to detect the radar-signal 26 that may be indicative of a detected-target 46 present on the trailer 14. As used herein, the detected-target 46 present on the trailer may be a feature 28 of the trailer 14 that is detected by the radar-sensor 20 and tracked by a controller 48, as will be described below.

By way of example and not limitation, the radar-sensor 20 may be configured to output a continuous or periodic data stream that includes a variety of signal characteristics associated with each target detected. The signal characteristics may include or be indicative of, but are not limited to, the range 22 to the detected-target 46 from the host-vehicle 12, the azimuth-angle 24 to the detected-target 46 relative to a host-vehicle-longitudinal-axis 50, an amplitude (not shown) of the radar-signal 26, and a relative-velocity (not shown) of closure relative to the detected-target 46. A target is generally detected because the radar-signal 26 from the detected-target 46 has sufficient signal strength to meet some predetermined threshold. That is, there may be targets that reflect the radar-signal 26, but the strength of the radar-signal 26 is insufficient to be characterized as one of the detected-targets 46. Data that corresponds to a strong-target 46A will generally be from consistent, non-intermittent signals. However, data that corresponds to a weak-target 46B may be intermittent or have some substantial variability due to a low signal-to-noise ratio.

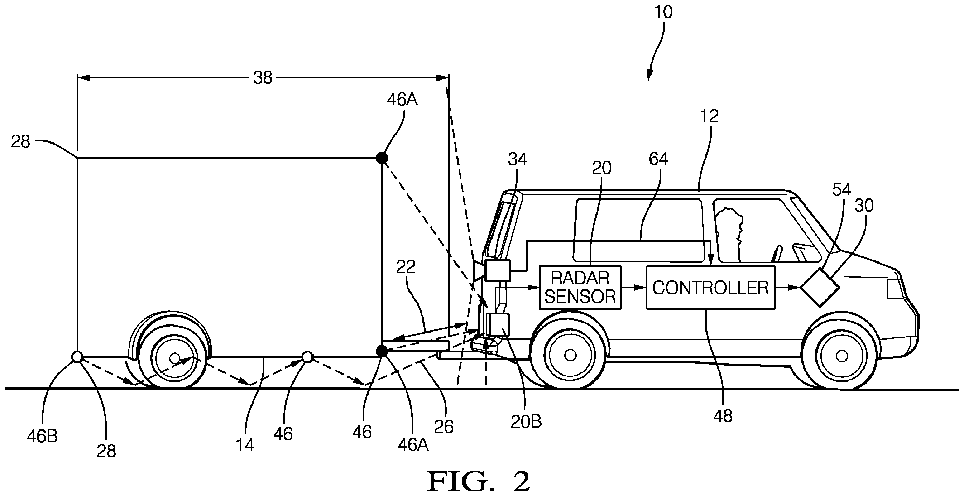

Fig. 2 is a right-side view of the system 10 of Fig. 1. When the trailer 14 is being towed, there will generally be some consistent reflected signals created from strong-targets 46A such as the front of the trailer or other highly reflective objects such as wheel wells or fenders of the trailer 14; and some intermittent reflected signals from weak-targets 46B such as the back bumper of the trailer 14 or other-vehicles (not shown) such as a motorcycle for example. Reflected signals from the weak-targets 46B may be, for example, a multi-path reflection from under the trailer 14 as the radar-signal 26 bounces between the trailer 14 and the ground, or by multi-path reflections traveling through a grated opening of the trailer 14 or cross-frame members of the frame of the trailer 14.

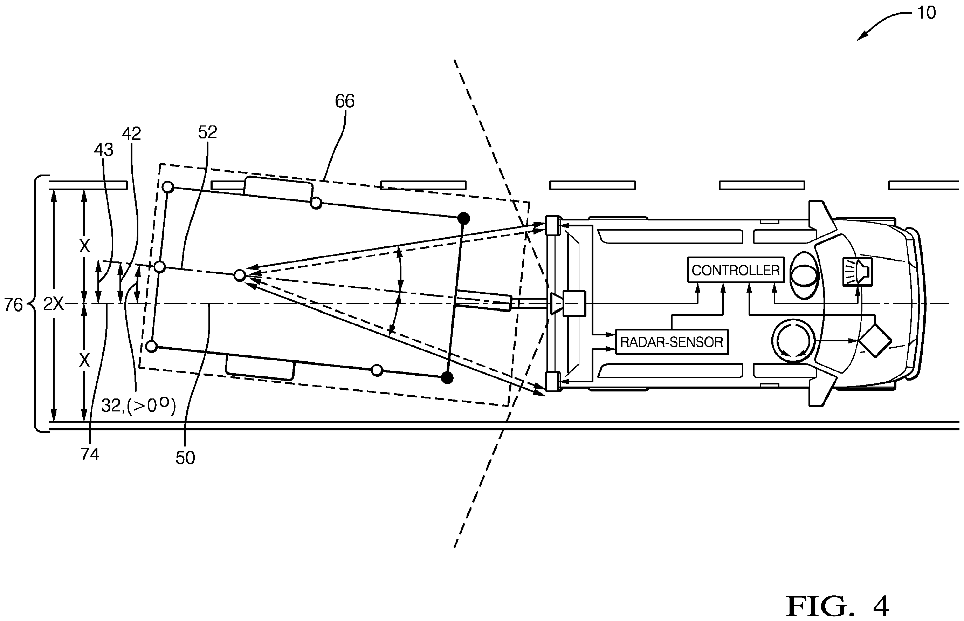

The system 10 includes the angle-detector 30 used to determine the trailer-angle 32 relative to the host-vehicle 12 of the trailer 14 towed by the host-vehicle 12. The trailer-angle 32 is defined as the angle between a host-vehicle-longitudinal-axis 50 and a trailer-longitudinal-axis 52, and is shown to be zero degrees (0°) in Fig. 1 (i.e. the trailer 14 is directly behind the host-vehicle 12). In contrast, Fig. 4 shows an example when the trailer-angle 32 is not zero. The angle-detector 30 is in electrical communication with the controller 48, and may be a device (not shown) mounted on a trailer-hitch (not shown) of the host-vehicle 12 or on the trailer 14, that is configured to provide a measurement of the angle that exists between the host-vehicle-longitudinal-axis 50 and the trailer-longitudinal-axis 52. The angle-detector 30 may be a Lidar-sensor (not shown), or any other suitable method to detect the trailer-angle 32. Preferably, the function of the angle-detector 30 may be provided by a yaw-sensor 54 that may already exist on most vehicles, such as the 6DF-1N6-C2-HWL from Honeywell Sensing and Control, Golden Valley, Minnesota, USA, and is used to determine a yaw-rate 56 of the host-vehicle 12, from which the trailer-angle 32 may be determined by the controller 48. It is advantageous to use the yaw-sensor 54 of the host-vehicle 12, in conjunction with the radar-sensor 20, to determine the trailer-angle 32 to eliminate a separate component of the system 10, thereby reducing cost and complexity.

The system 10 includes the camera 34 configured to detect the lane-marking 36 of the roadway 18 traveled by the host-vehicle 12 and the trailer 14. Examples of the camera 34 suitable for use on the host-vehicle 12 are commercially available as will be recognized by those in the art, one such being the ASX340AT from ON Semiconductor ® of Phoenix, Arizona, USA.

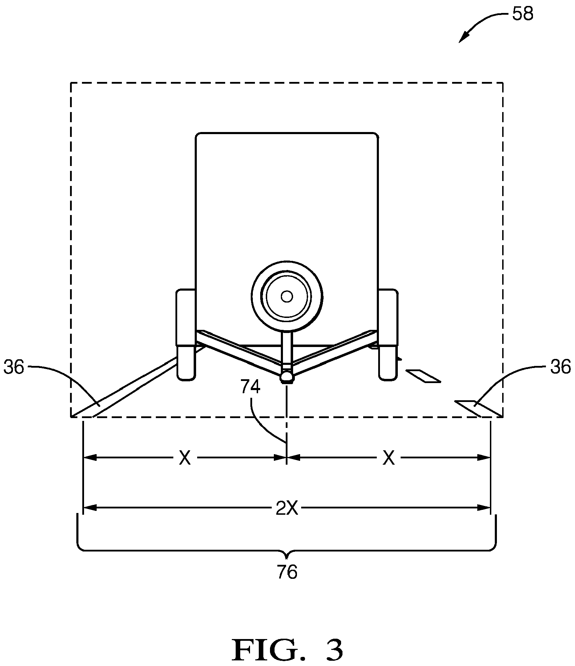

The camera 34 may be mounted on the rear of the host-vehicle 12 and detect the lane-marking 36 of the roadway 18 behind the host-vehicle 12, or may be a mounted on the front of the host-vehicle 12 and detect the lane-marking 36 of the roadway 18 ahead of the host-vehicle 12, or may be a mounted in the interior of the host-vehicle 12 at a location suitable for the camera 34 to view the area around the host-vehicle 12 through the windows of the host-vehicle 12. Detecting the lane-marking 36 ahead of the vehicle is advantageous because the camera 34 may have a less restricted view of the roadway 18 that enables the system 10 to determine an upcoming change to a width of the travel-lane 16. The camera 34 is typically a rear-facing video-type camera 34 or camera 34 that can capture an image 58 (Fig. 3) of the roadway 18 behind the host-vehicle 12 and surrounding area at a sufficient frame-rate, of ten frames per second, for example.

The image 58 may include, but is not limited to, the lane-marking 36 on the left side and on the right side of the travel-lane 16 of the roadway 18. The lane-marking 36 may include a solid-line, as is typically used to indicate a boundary of the travel-lane 16 of the roadway 18. The lane-marking 36 may also include a dashed-line, as is also typically used to indicate the boundary of the travel-lane 16 of the roadway 18. The image 58 may also include objects proximate to the host-vehicle 12, such as the trailer 14 and other vehicles (not shown).

The system 10 includes the controller 48 in electrical communication with the radar-sensor 20, the angle-detector 30, and the camera 34. The controller 48 is used to determine when the trailer 14 is departing from the travel-lane 16 of the roadway 18 and to activate an alert-device 60 to warn an operator 62 of the host-vehicle 12 that the trailer 14 is making an unintentional departure from the travel-lane 16. The controller 48 may consider the departure of the trailer 14 from the travel-lane 16 unintentional when a turn-signal of the host-vehicle 12 is not activated prior to the departure of the trailer 14 from the travel-lane 16, for example.

The controller 48 is configured (e.g. programmed or hardwired) to receive the radar-signal 26 from the radar-sensor 20, to receive the yaw-rate 56 from the yaw-sensor 54, and to receive an image-signal 64 from the camera 34. The controller 48 may include a processor (not shown) such as a microprocessor or other control circuitry such as analog and/or digital control circuitry including an application specific integrated circuit (ASIC) for processing data as should be evident to those skilled in the art. The controller 48 may include a memory (not shown), including non-volatile memory, such as electrically erasable programmable read-only memory (EEPROM) for storing one or more routines, thresholds and captured data. The one or more routines may be executed by the processor to perform steps for determining if signals received by the controller 48 indicate the presence of objects as described herein.

The controller 48 is generally configured to determine if the radar-signal 26 arising from the detected-targets 46 corresponds to (i.e. is associated with) the trailer 14 being towed by the host-vehicle 12. That is, the controller 48 determines if the trailer 14 is present, so is actually being towed by the host-vehicle 12. The controller 48 is also generally configured to define a two-dimensional (2D) component of a trailer-boundary 66 characterized as occupied by the trailer 14 and thereby excluded from the zone proximate to the host-vehicle 12 where objects can be detected. By defining the portion of the zone proximate to the host-vehicle 12 that is the trailer-boundary 66, the controller 48 can more readily determine if what seems to be a new target indicated by the radar-signal 26 is likely from the trailer 14, or is likely from something other than the trailer 14, such as the other-vehicle (not shown).

The radar-signal 26 may be analyzed by the controller 48 to categorize the data from each detected-target 46 with respect to a list of previously detected-targets 46 having established tracks. As used herein, a track refers to one or more data sets that have been associated with a particular one of the detected-targets 46. By way of example and not limitation, if the amplitude of the radar-signal 26 is greater than a predetermined amplitude threshold, then the controller 48 determines if the data corresponds to a previously detected-target 46 or if a new-target has been detected. If the data corresponds to a previously detected-target 46, the data is added to or combined with prior data to update the track of the previously detected-target 46. If the data does not correspond to any previously detected-target 46 because, for example, it is located too far away from any previously detected-target 46, then it may be characterized as a new-target and assigned a unique track identification number. The identification number may be assigned according to the order that data for a new detected-target 46 is received, or may be assigned an identification number according to a grid location in the zone proximate to the host-vehicle 12.

The expectation is that the detected-target 46 or the track that corresponds to (i.e. is associated with) the trailer 14 would have a relative-velocity near zero, and that this condition would persist for an extended period of time. That is, the detected-target 46 corresponds to the trailer 14 if the range 22 to the detected-target 46 varies less than a variation threshold (e.g. less than 0.25 meters/second) for greater than a time threshold (e.g. greater than 5 seconds). It is noted that characterizing a target as having a relative-velocity near zero and having a variation in range 22 less than a variation threshold are effectively the same characterization. As such, references to the term 'range-rate' in the discussion that follows are directly comparable to the terms 'relative-velocity', 'relative-rate' and 'variation-in-range'.

Given the track data described above, each track is compared to a defined bounded area behind the host-vehicle 12 and only tracks that are within those bounds are used. The boundary is set by calibrations, and suitable values for the boundary are 2.4 meters wide, 16.2 meters long, and 4.3 meters high. Additional constraints such as minimum amplitudes or detections sources may be applied to qualify a track prior to using it to determine the trailer-length 38 and the trailer-width 40. After the final track set is determined, the trailer-length 38 and the trailer-width 40 are determined in two steps: Determine the unfiltered (raw) value, and Filter the raw value to the final value. The unfiltered trailer-length 38 is determined by taking the maximum longitudinal-distance back from the rear bumper of the host-vehicle 12, and the raw trailer-width 40 is determined by taking the maximum lateral-distance between any two points within the bounded area. The unfiltered measures are then filtered. One way of filtering is to use a low pass filter with a long time constant such as five seconds. The second way of filtering is to create a histogram of the unfiltered measures where one count is added to the bin that corresponds to the current unfiltered measure and then the bin with the highest counts is selected as the filtered measure. This histogram filter approach appears to create a more stable estimation than the low pass filtered measure. By executing the processes described above, the trailer-length 38 of the trailer-boundary 66 can be determined by the controller 48 based on the longitudinal-distance to a most-distant-target 68 (Fig. 1) that corresponds to the trailer 14 and is closer to the host-vehicle 12 than a maximum trailer-length (16.2 meters) and the trailer-width 40 of the trailer-boundary 66 can be determined based on the lateral-distance between a left-most-target 70 that corresponds to the trailer 14, and a right-most-target 72 that corresponds to the trailer 14 (Fig. 1). While the trailer-width 40 may be determined by other methods, such as by processing the image 58 captured by the camera 34, it is advantageous to use the radar-sensor 20 due to its ability to detect features 28 of the trailer 14 that may not be viewable by the camera 34 such as wheel wells or fenders of the trailer 14.

The controller 48 is further configured to determine the trailer-angle 32 by using the yaw-sensor 54 to adjust the sensing-area (not shown) behind the host-vehicle 12, in conjunction with the radar-sensor 20 to determine the relative-velocity of the tracked-target associated with the trailer 14, and determine the trailer-angle 32 based on a longitudinal-velocity (not shown) and a lateral-velocity (not shown) of the detected-target 46.

The controller 48 is further configured to determine a centerline 74 on the roadway 18 for the trailer 14 based on the lane-marking 36 of the roadway 18 detected by the camera 34. That is, the image 58 (Fig. 3) detected or captured by the camera 34 is processed by the controller 48 using known techniques for image-analysis to determine where along the roadway 18 the trailer 14 should be centered. Vision processing technologies, such as the EYE Q® platform from Mobileye Vision Technologies, Ltd. of Jerusalem, Israel, or other suitable devices may be used. By way of example and not limitation, the centerline 74 is preferably in the middle of the travel-lane 16 defined by the lane-marking 36 of the roadway 18. The controller 48 is also configured to determine a lane-width 76 of the travel-lane 16 using the known vision processing technologies described above.

The controller 48 is further configured to determine when the feature 28 of the trailer 14 tracked by the radar-sensor 20 is departing from the travel-lane 16 based on the radar-signal 26, the trailer-angle 32 and the lane-marking 36. The feature 28 may be a corner of the trailer 14, as illustrated in Fig. 4 where the left-rear corner of the trailer 14 is departing from the left-side of the travel-lane 16, or could be any feature 28 of the trailer 14 that is tracked by the radar-sensor 20, such as a front-corner of the trailer 14 or a fender of the trailer 14, for example. The controller 48 compares the relative positions of the detected-targets 46 to the lane-marking 36 of the travel-lane 16 to determine when the feature 28 is departing from the travel-lane 16. The trailer-length 38 and the trailer-width 40 dimensions in combination with the trailer-angle 32 enable the accurate determination of the positions of the features 28 relative to the lane-marking 36, and will be apparent to one skilled in the art of geometry. The controller 48 may then activate an alert-device 60 to warn the operator 62 of the host-vehicle 12 that the trailer 14 is making an unintentional departure from the travel-lane 16.

The controller 48 is further configured to determine the trailer-sway-rate 42 based on the trailer-angle 32. The trailer-sway-rate 42 is indicative of an oscillation or sudden change of the trailer-angle 32. The controller 48 is further configured to activate the alert-device 60 if the trailer-sway-rate 42 exceeds a predetermined sway-threshold 43 to warn the operator 62 of the host-vehicle 12 of the condition. That is, if the trailer-angle 32 oscillates greater than ten degrees (10 °) within a period of time of less than five seconds (5 seconds), the controller 48 may activate the alert-device 60 to warn the operator 62 that the trailer 14 may be unstable. The predetermined sway-threshold 43 may be a single number, or may be a table of numbers that may be calibrated based on the speed (not shown) of the host-vehicle 12. The magnitude of the trailer-sway-rate 42 may also be used by the stability-control-systems (not shown) of the host-vehicle 12 to mitigate any instability of the trailer 14.

Accordingly, a trailer-detection system 10, and a controller 48 for the trailer-detection system 10 is provided. The system 10 is an improvement over prior trailer-detection systems because the system 10 is configured to more accurately determine when a trailer 14 towed by the host-vehicle 12 is departing a travel-lane 16 of a roadway 18 using sensors that exist on most vehicles, thereby eliminating additional components and reducing cost. This improvement also enables the system 10 to more accurately determine a trailer-length 38, a trailer-width 40, and a trailer-sway-rate 42 of the trailer 14.

While this invention has been described in terms of the preferred embodiments thereof, it is not intended to be so limited, but rather only to the extent set forth in the claims that follow.

## Claims

1. A trailer-detection system (10) configured to determine a position of a trailer (14) towed by a host-vehicle (12), said system (10) comprising:
a radar-sensor (20) used to determine a range (22) and an azimuth-angle (24) of a radar-signal (26) reflected by a trailer (14) towed by a host-vehicle (12);
an angle-detector (30) used to determine a trailer-angle (32) relative to the host-vehicle (12) of the trailer (14) towed by the host-vehicle (12);
a camera (34) configured to detect a lane-marking (36) of a roadway (18) traveled by the host-vehicle (12) and the trailer (14); and
a controller (48) in communication with the radar-sensor (20), the angle-detector (30), and the camera (34), said controller (48) configured to determine when the trailer (14) is departing from a travel-lane (16) of the roadway (18) based on the radar-signal (26), the trailer-angle (32) and the lane-marking (36).

2. The system (10) in accordance with claim 1, wherein the system (10) includes an alert-device (60) detectable by an operator (62) of the host-vehicle (12), and the controller (48) is further configured to activate the alert-device (60) when the trailer (14) is departing from the travel-lane (16) of the roadway (18).

3. The system (10) according to any one of the preceding claims, wherein where the controller (48) is further configured to determine a trailer-sway-rate (42) that is indicative of an oscillation of the trailer-angle (32).

4. The system (10) in accordance with claim 3, wherein the system (10) includes an alert-device (60) detectable by an operator (62) of the host-vehicle (12), and the controller (48) is further configured to activate the alert-device (60) when the trailer-sway-rate (42) is greater than a predetermined sway-threshold (43).

5. The system (10) according to any one of the preceding claims, wherein the angle-detector (30) includes a yaw-sensor (54) used to determine a yaw-rate (56) of the host-vehicle (12), and the trailer-angle (32) is determined based on the yaw-rate (56).

6. The system (10) according to any one of the preceding claims, wherein the controller (48) determines a trailer-boundary (66) based on the radar-signal (26).

7. The system (10) according to any one of the preceding claims, wherein the controller (48) determines a trailer-length (38) of the trailer (14) based on the radar-signal (26).

8. The system (10) according to any one of the preceding claims, wherein the controller (48) determines a trailer-width (40) of the trailer (14) based on the radar-signal (26).

9. The system (10) according to any one of the preceding claims, wherein the camera (34) detects the lane-marking (36) of the roadway (18) ahead of the host-vehicle (12).

10. The system (10) according to any one of the preceding claims, wherein the camera (34) detects the lane-marking (36) of the roadway (18) behind the host-vehicle (12).

11. The system (10) according to any one of the preceding claims, wherein the camera (34) detects the lane-marking (36) of the roadway (18) ahead of the host-vehicle (12) and detects the lane-marking (36) of the roadway (18) behind the host-vehicle (12).
